# EUROPEAN PATENT APPLICATION

(11) **EP 2 896 987 A1**
(43) Date of publication of application: **22.07.2015**
(21) Application number: 15151430.4
(22) Date of filing: 16.01.2015
(51) Int. Cl.: G02C 5/00, B32B 5/26

(54) **Frame for glasses and process for the obtainment thereof**

(30) Priority: 17.01.2014 IT PD20140007
(71) Applicant: Marcolin S.P.A., 32013 Longarone (BL) (IT)
(72) Inventor: Zanetto, Moreno, I-32040 Vigo di Cadore (BL) (IT)
(74) Representative: Gallo, Luca

(57) **Abstract**

Frame for glasses, which comprises: - a support structure (2) provided with a front (3) and with a pair of arms (4) connected to the front (3); and - at least one fabric cutting (9) fixed to the support structure (2) and intended to remain visible when the frame (1) is worn by a user. At least one of the components of the support structure (2) has at least one surface portion (10) made of cellulose acetate and the cutting (9) is fixed to such surface portion (10), partially embedded therein, with the cellulose acetate at least partially inserted in the weft of the fabric, in order to retain the cutting (9) fixed to the component of the support structure (2).

Also forming the object of the invention is a process for obtaining the aforesaid frame for glasses.

## Description

### Field of application

The present invention regards a frame for glasses and a process for the obtainment thereof according to the preamble of the relative independent claims.

The present frame is intended to be advantageously employed for producing glasses and is therefore inserted, together with the process for the obtainment thereof, in the industrial field of eyeglasses, i.e. in the field of production of glasses and of accessories and components for glasses.

### State of the art

As is known, the eyeglasses field is strictly correlated with the fashion field, and as such is affected by the variations of taste and trends that affect the latter.

In order to better meet the needs of the fashion field, frames for glasses have for some time been sold comprising the front and/or the arms covered with fabric.

Such frames generally comprise a support structure, comprising a front and a pair of arms and made of a material adapted to confer to the frame the necessary support capacity, such as a metal or rigid polymer material, and a cover layer made of a flexible material, such as in particular a fabric, which is arranged to partially or totally cover the front and/or the pair of arms of the support structure.

Generally, the cover layer is glued to the support structure. In particular, the cover layer is usually arranged to completely enclose the front or the arms, in order to prevent its free edges - over time and with the use of the glasses - from lifting up and leading to the gradual detachment of the cover layer itself from the support structure.

A significant drawback of the frames for glasses thus obtained lies in the fact that the fabric cover layer tends with use to be dirtied and to be deteriorated in the zones of the frame that are in contact with the face of the person wearing the glasses and hence with the skin sebum and/or with the sweat thereof; such zones include for example the frame support bridge on the nose, the lower portions of the rims for the lenses that can rest on the cheekbones, the upper portions of the rims for the lenses that can rub against the eyebrows or the portions of the arms that rest on the temples.

In order to overcome this drawback, glasses frames have been designed whose front and/or whose arms are provided on their external faces with perimeter relief bands. Such perimeter bands delimit a seat susceptible for receiving a fabric cutting glued to the support structure. The bands are adapted to protect the perimeter edge of the fabric cutting, preventing it from detaching from the support structure over time and with use.

With respect to the previously-described known frames, the latter frames have the advantage of preserving the fabric from direct contact with the face of the user.

Nevertheless, the frames of known type just described above have a rather rough appearance and not very satisfactory aesthetic characteristics - which do not suit glasses of high quality.

Also known from the patent WO -A- 2013/174870 are glasses obtained with a plurality of layers in succession, of which at least one is made of cellulose acetate and at least one of fabric, which is completely impregnated in an elasticizing polymer solution such as acetone. Even if the weft of the underlying fabric is visible, when touched the glasses do not give a sensation that is sufficiently similar to fabric.

Also known from the patent WO 2013/174870 are glasses obtained with a plurality of layers in succession, of which at least one layer is made of cellulose acetate and at least one layer is made of a fabric material, such fabric layer being completely immersed in a solution of plasticized cellulose acetate polymer, such as acetone. The eyeglasses thus obtained have the weft of the underlying fabric visible, but - when touched - do not give a sensation that is entirely similar to that of fabric.

### Presentation of the invention

In this situation, the problem underlying the present invention is to eliminate the drawbacks of the abovementioned prior art, by providing a frame for glasses provided with a fabric cover layer that is firmly fixed to the support structure.

A further object of the present finding is to provide a glasses frame provided with a fabric cover layer that is maintained in a good state of preservation over time and following use.

Another object of the present finding is to provide a glasses frame that has excellent aesthetic characteristics and is suited for obtaining glasses of high quality.

A further object of the present finding is to provide a glasses frame that is structurally simple and entirely reliable in operation.

Another object of the present finding is to provide a process for obtaining a glasses frame that is simple and inexpensive to obtain.

A further object of the present finding is to provide a process for obtaining a glasses frame that results quick and safe.

Another object of the present finding is to provide a process for obtaining a glasses frame that is able to satisfy production cost savings requirements as well as frame quality requirements.

These and still other objects are all achieved by the glasses frame and by the process for the obtainment thereof, object of the present invention.

### Brief description of the drawings

The technical characteristics of the finding, according to the aforesaid objects, can be clearly seen in the contents of the below-reported claims, and the advantages thereof will be clearer from the following detailed description, made with reference to the enclosed drawings, which represent several merely exemplifying and non-limiting embodiments thereof, wherein:
- Fig. 1 shows a perspective view of a frame for glasses according to the present invention;
- Figs. 2 and 2a respectively show a plan view and a side view of one arm of a glasses frame according to the present invention in accordance with one possible embodiment thereof.

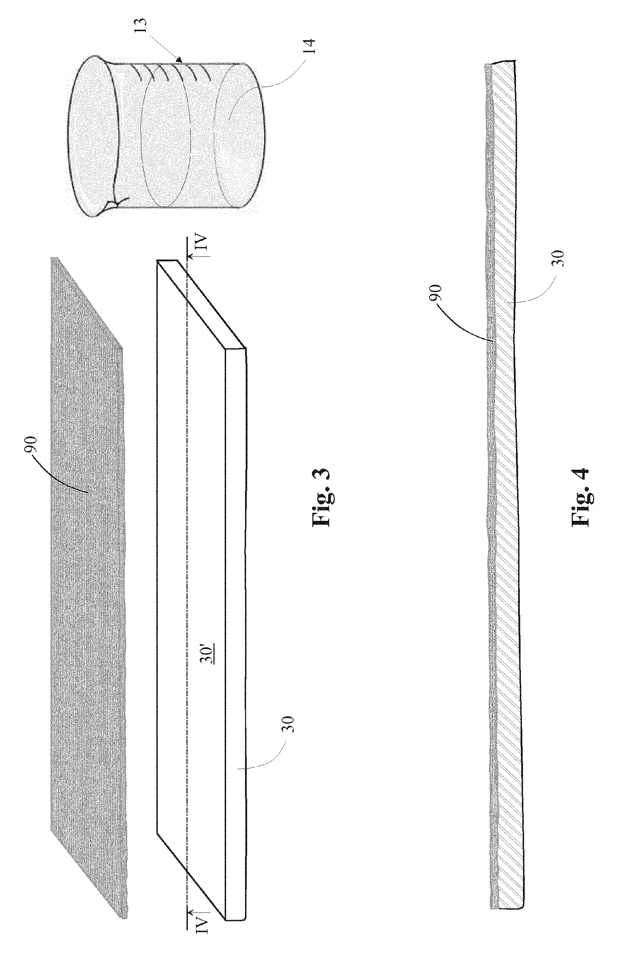

- Fig. 3 shows a perspective view of a provided support plate, of a provided piece of fabric and of a provided dose of solvent for obtaining one or more of the components of the glasses frame di Fig. 1;
- Fig. 4 shows a section view of the support plate of Fig. 2, made along the line IV-IV of the same figure and with the piece of fabric already fixed thereto;
- Fig. 5 shows a perspective view of an enlarged detail of the support plate with the piece of fabric fixed;
- Fig. 6 shows a top perspective view of the support plate with the piece of fabric fixed, on which the front of a glasses frame according to the invention has been obtained via milling.

### Detailed description of a preferred embodiment

With reference to the enclosed drawings, reference number 1 indicates overall the frame for glasses, object of the present invention.

The frame 1, according to the present invention, is intended for obtaining glasses 100 and comprises, in a *per se* known manner, a support structure 2 comprising, as its components, a front 3 and two arms 7 connected to the front 3. More in detail, the front 3 is provided with two so-called rims 4 that support a pair of lenses 5 and are connected in the central part by a bridge 6, and the arms 7 are in particular pivoted by means of hinges to the sides of the front 3 and, more specifically, to two lateral portions thereof that can be directed towards the rear part of the glasses, known in the technical jargon of the field with the term end pieces 8.

The rims 4 of the front 3 according to the present invention are preferably of closed type, i.e. they completely enclose the perimeter of the lenses 5. Nevertheless, without departing from the protective scope defined by the present patent, the rims 4 may only enclose a part of the perimeter of the lenses 5, such as in particular the upper part, in order to obtain for example a frame of so-called Nylor type.

In particular, the front 3 comprises a first internal face 3i intended to be directed towards the face of the person wearing the glasses 100 and a first external face 3e opposite the first internal face 3i and intended to remain visible when the glasses 100 are worn by a user. In accordance with a preferred embodiment, the arms 7 have a flattened form and are each provided with a second internal face 7i intended to be directed towards the face, i.e. in particular towards the temples, of the person wearing the glasses 100, and with a second external face 7e opposite the second internal face 7i and intended to remain visible when the glasses 100 are worn by a user.

The frame 1 according to the present invention further comprises one or more fabric cuttings 9, fixed to the support structure 2 and intended to remain visible when the frame 1 is worn by a user.

In accordance with the idea underlying the present invention, one or more components of the support structure 2, i.e. one or more from among the front 3 and the two arms 7, comprise one or more surface portions 10 made of cellulose acetate and each of the cuttings 9 is fixed to a corresponding surface portion 10, partially embedded therein, with the cellulose acetate at least partially inserted in the weft of the fabric in order to retain the cutting 9 fixed to the corresponding component of the support structure 2.

With the above-indicated term weft, it must be intended the woven structure of the fabric, obtained from the weaving of weft and warp threads.

More clearly, each cutting 9 is joined to the corresponding surface portion 10 of the support structure 2 due to the mutual penetration of the material that constitutes the cutting 9 and the cellulose acetate. In particular, the cellulose acetate inserted in the interstices defined by the weft of the fabric is coupled to the fibers of the fabric itself, such that the fabric is firmly fixed thereto, without requiring the interposition of glues or adhesives of any kind.

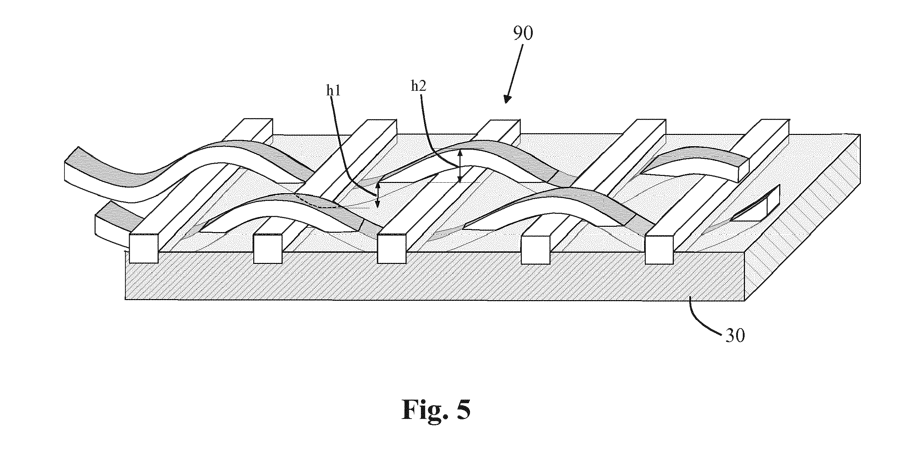

The fabric cutting 9, fixed to the surface portion 10 of one of the components of the support structure 2, is therefore partly immersed in the cellulose acetate for a first height indicated with h1 in figure 5 of the aforesaid surface portion 10, and remains with an upper layer thereof for a height indicated with h2 in figure 5 that is substantially free and touchable.

The layer h2 of fabric cutting 9 projects, i.e. as can be seen in figure 5, for example from the surface portion 10 of the cellulose acetate. Such projecting portion is susceptible to confer a touch sensation equal to that of the fabric with which it is formed.

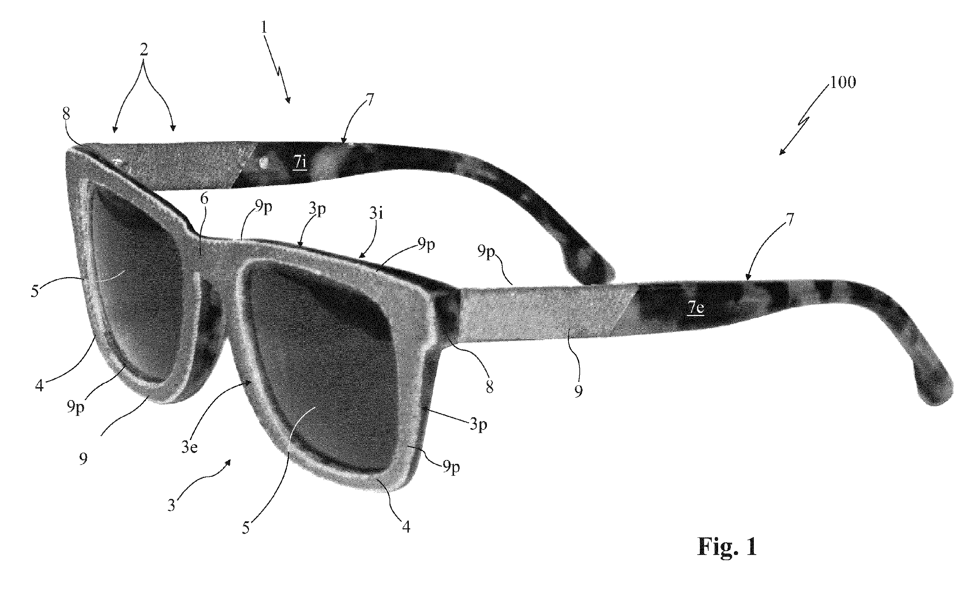

According to a preferred embodiment of the frame 1, the perimeter edge 9p of the cutting 9 is sharply cut and is at least partially visible on the frame 1, as shown in Figure 1 and better explained hereinbelow.

More in detail, the component of the support structure 2 carrying the cutting 9 fixed is not provided with containment bands or with relief edges adapted to contain the cutting 9 and the relative gluing means, as in the frames of the prior art, since the cutting 9 is firmly fixed to the component and therefore there is no particular need to protect the perimeter edge 9p thereof for the purpose of preventing the detachment of the cutting 9 itself over time and with use.

Preferably, the component or components of the support structure 2 intended to carry one or more cuttings 9 fixed are entirely made of cellulose acetate and may possibly comprise a metal core (in particular with reference to the arms 7). Otherwise, without departing from the protective scope defined by the present patent, the aforesaid components of the support structure 2 can be made of two or more different materials and therefore be only partially made of cellulose acetate.

The cuttings 9 are then fixed to one or more of the components of the support structure 2 at the aforesaid surface portions 10, which are preferably provided at zones of the support structure 2 intended to remain visible when the glasses 100 are worn by a user and, more in detail, at zones that are not intended to come into contact with the user's face.

In accordance with a preferred embodiment of the frame 1 according to the present invention, one or more cuttings 9 are fixed to the front 3 of the support structure 2 and in particular only on the external face 3e thereof. More in detail, the front 3 comprises a surface portion 10, carrying a cutting 9 fixed, which is preferably extended substantially over the entire external face 3e thereof, as illustrated in the enclosed Figure 1. Advantageously the front 3 can in such case be entirely made of cellulose acetate.

Preferably the front 3 comprises a border perimeter surface 3p, which connects the internal face 3i and the external face 3e and substantially defines the thickness of the front 3, and the perimeter edge 9p of the cutting 9, in particular sharply cut, terminates flush on the junction edge between the external face 3e and the border perimeter surface 3p.

In accordance with a further possible embodiment, one or both arms 7 carry a respective cutting 9 fixed, preferably on their second external face 7e. Advantageously the arms 7 are in such case entirely made of cellulose acetate, possibly comprising an internal metal core as specified above.

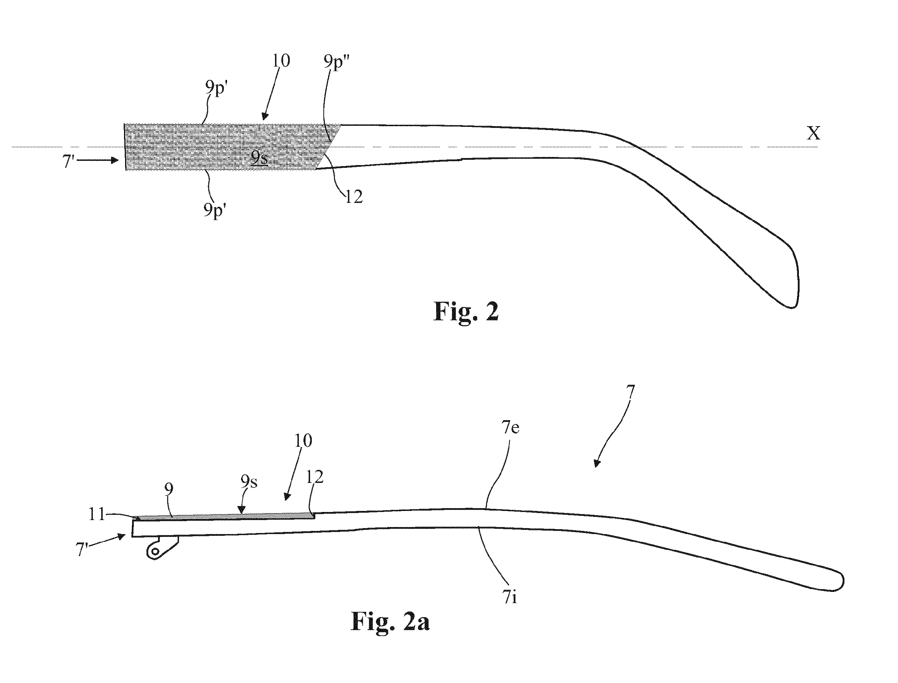

Preferably, the surface portion 10 of the arm 7 intended to receive the cutting 9 is defined by a seat 11 obtained on the second external face 7e of the arm 7, preferably at the end portion of the arm 7 intended to be connected to the front 3, as illustrated in the enclosed Figure 2. More in detail, the seat 11 is defined by means of a groove obtained starting from the second external face 7e of the arm 7 and is extended from the end 7' of the connection arm 7 to the front 3 up to a step 12. Preferably the height of the step 12 is substantially equivalent to the thickness of the fabric that constitutes the cutting 9 fixed to the surface portion 10 of the arm 7, in the seat 11, such that the free surface 9s of the cutting 9, which is touchable, is substantially flush with the portion of the second external face 7e of the arm 7 that is extended beyond the step 12, as (is visible) SHOWN in Figure 2. The longitudinal sections 9p' of the perimeter edge 9p of the cutting 9 that are extended substantially parallel to the preferred extension axis X of the arm 7 in such case remain visible, while the transverse section 9p" of the perimeter edge 9p adjacent to the step 12 is preferably in abutment against the latter and hence not visible.

Different from that reported above, the arm 7 can of course comprise two or more surface portions 10 carrying respective cuttings 9 fixed, or it can comprise a surface portion 10 that is different from that described briefly above and which can for example be substantially extended over its entire second external face 7e, without departing from the protective scope defined by the present patent.

Hence, the frame 1 in accordance with the present invention comprises at least one fabric cutting 9, fixed to the front 3 of the support structure 2, or to one or both arms 7, or both to the front 3 and to one or both arms 7, and in particular is characterized (for the fact) in that the cutting 9 is directly partially embedded in the relative surface portion 10 of the support structure 2. The cutting 9, partially embedded in the surface portion 10, can thus remain with its perimeter edge 9p, or with a part thereof, visible on the support structure 2, without running the risk that the latter - over time and with use - will be lifted and detached from the support structure 2. The components of the support structure 2 that carry the cutting 9 fixed therefore do not have to be completely covered by fabric, nor do they have to comprise perimeter relief bands, as already provided in the frames of the prior art, in order to prevent the detachment of the cutting 9 itself, such that the frame 1 according to the present invention has optimal aesthetic characteristics. Moreover, in the frame in accordance with the present invention, the zones of the components of the support structure 2 intended to come into contact with the face of the user wearing the glasses 100 can remain free from the cutting 9, which therefore is not subjected to being dirtied and quickly deteriorated.

Also forming the object of the present invention is a process for obtaining a frame 1 for glasses in particular of the above-described type, with regard to which the same reference numbers will be maintained hereinbelow.

The process according to the present invention comprises an operative step of arranging a support plate 30 provided with at least one fixing surface 30' made of cellulose acetate. Preferably the entire support plate 30 is made of cellulose acetate. Also provided are an operative step of arranging a piece 90 of fabric and an operative step of arranging a dose 13 of a solvent 14 susceptible of dissolving the cellulose acetate.

The process then provides that the fabric piece 90 be deposited on the fixing surface 30' of the support plate 30, and that on such fixing surface 30' the dose 13 of solvent 14 be distributed, in order to wet the surface 30' itself and at least partially dissolve it.

More in detail, the deposition of the fabric piece 90 on the fixing surface 30' of the support plate 30 preferably precedes the distribution of the dose 13 of solvent 14 on the fixing surface 30', such that such distribution occurs by means of impregnation of the fabric piece 90 and infiltration of the solvent through the fabric piece 90 itself.

Otherwise, without departing from the protective scope defined by the present patent, the dose 13 of solvent 14 can be distributed on the fixing surface 30' before the fabric piece 90 is deposited on such surface, or the fabric piece 90 can be impregnated with solvent 14 before being deposited on the fixing surface 30', such that the distribution of the dose 13 of solvent 14 on the fixing surface 30' in the latter case occurs by means of the impregnated fabric piece 90.

Preferably the fabric piece 90 is arranged well-extended on the fixing surface 30' of the support plate 30, without creating creases or folds.

The process in accordance with the present invention then comprises a further operative step of compressing the fabric piece 90 against the fixing surface 30' of the support plate 30 in order to embed, preferably at least partially, the fabric piece 90 in the fixing surface 30' dissolved by the solvent 14. The compression step in particular ensures a closer contact of the dissolved i.e. softened cellulose acetate with the fabric piece 90 and, in particular, pushes the cellulose acetate to penetrate into the interstices of the weft of the fabric.

Advantageously, the compression step is carried out by applying, on the piece fabric 90 rested on the fixing surface 30', a pressure of at least 2.5 kPa and preferably of about 2.8 kPa, and by maintaining such pressure for a time interval equal to at least 5 minutes and preferably for a time interval of about 10 minutes. Such pressure values and the time interval of application of the pressure have in fact proven sufficient to ensure an optimal penetration of the cellulose acetate of the fixing surface 30', dissolved by the solvent, into the weft of the fabric and hence the optimal fixing of the latter to the support plate 30.

In particular, the application on a fabric piece 90 arranged on a rectangular support plate 30 with sizes of the sides equal to about 220 mm and about 80 mm (such sizes being of a cellulose plate generally used for obtaining the front of a frame), with a weight of about 5 Kg and for a time of about 10 minutes, allows obtaining an optimal fixing of the fabric piece 90 to the plate 30 itself. The application of greater pressures or the maintenance of such pressures for more prolonged time periods did not bear particular advantages.

The process also comprises a step of drying the support plate 30, with the fabric piece 90 arranged on the fixing surface 30' and partially embedded therein following the compression exerted thereon, in order to fix the fabric piece 90 itself to the support plate 30. Advantageously, such drying step occurs simply via air evaporation of the solvent at ambient temperature.

Preferably the entire above-described process is obtained at ambient temperature, given that it is not necessary to operate at higher temperatures than ambient temperature, not even for facilitating the softening of the cellulose acetate and the partial penetration of the fabric piece 90 in the fixing surface 30' of the support plate 30.

The distribution of the solvent on the fixing surface 30' in fact causes the partial dissolution thereof, allowing the fabric piece 90 to partially embed in the support plate 30 and the dissolved cellulose acetate fraction to be inserted in the weft of the fabric of the piece 90 and to be coupled to the fibers thereof. The cellulose acetate thus closely connected to the fabric piece 90, once dried and solidified following the evaporation of the solvent 13, ensures a firm fixing of the fabric piece 90 to the support structure 30.

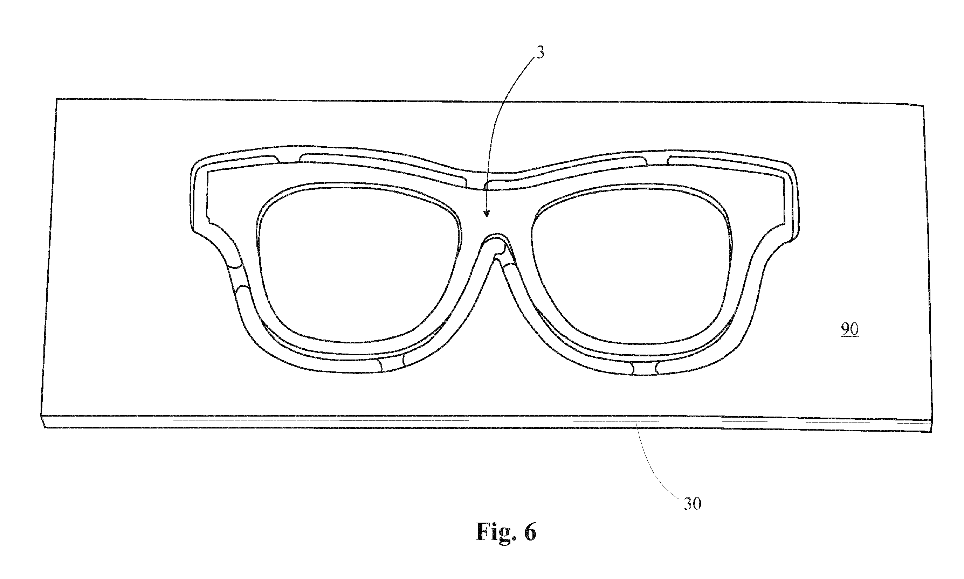

Advantageously, the process according to the present invention also comprises an operative step of milling the support plate 30 carrying the fabric piece 90 fixed, in particular following the aforesaid drying step, in order to obtain from the support plate 30 one or more components of the frame 1 for glasses according to the present invention, i.e. a front 3 or one or more arms 7. Figure 6 illustrates for example a support plate 30 with a fabric piece 90 fixed thereon following a milling step in order to obtain a front 3 for a frame 1.

Such step of milling the support plate 30 carrying the fabric piece 90 already fixed is particularly important for the purpose of obtaining a clean cut of the fabric piece 90 and thus for defining the sharply cut edge of the fabric cutting 9 that remains visible on the finished frame 1.

The process can also comprise a step of hot shaping the component of the frame 1 obtained from the support plate 30 with the fabric piece 90 fixed; such hot shaping step allows conferring the desired final shape to the component. With such hot shaping step, the rise of the bridge 6 of the front 3 could for example be defined, as could a slight convexity of the front 3, or the bending of the arms 7.

The support plate 30 used in order to obtain the components of the frame 1 can be flat, as illustrated in the enclosed figures, or it can be curved, or have a desired degree of convexity, if for example it is intended to make fronts 3 of enclosing type. In such case the step of compressing the fabric piece 90 against the fixing surface 30' of the support plate 30 will be achieved with the aid of suitable forms or by means of presses suitable for such purpose.

The process can also comprise further steps for finishing the components of the frame, such as for example a tumbling step, a washing step or a trimming step, carried out for example by means of a shaped cutter, in order to remove possible undesired fabric burrs, or possible steps of polishing or glazing of the portions of the components not covered by the cutting 9 or by the cuttings 9.

Preferably, the solvent employed in the process according to the present invention is acetone. It has in fact been verified that acetone is capable of optimally dissolving the cellulose acetate without however considerably altering the appearance thereof and without in particular altering the color thereof. Following the fixing of the fabric piece 90 on the plate 30 by means of the use of acetone, marks or stains that would be visible also in the component of the finished frame 1 - thus significantly compromising the aesthetic characteristics thereof - do not therefore remain in the cellulose acetate that has come into contact with the acetone.

In particular, the dose of acetone sufficient for ensuring an optimal fixing of the fabric piece 90 on a rectangular support plate 30, with sizes of the sides equal to about 220 mm and about 80 mm, is comprised between 30 ml and 80 ml and preferably is comprised between 50-65 ml for a thickness of the fabric of the piece 90 comprised between 0.6 mm and 1.2 mm.

Of course, the dose of solvent i.e. in particular of acetone necessary for ensuring the dissolution of a sufficient layer of cellulose acetate of the support plate 30, adapted to allow the suitable penetration of the piece 90 of fabric, must be evaluated as a function of the size of the portion of the support plate 30 that one intends to cover with the fabric and as a function of the thickness of the fabric and must therefore be increased with the increase of one or both of the aforesaid parameters.

The process according to the present invention is adapted to be used in a particularly advantageous manner in order to fix, to a support plate 30, pieces of fabric with large weft, such as jeans.

The process in accordance with the present invention therefore allows obtaining components for frames carrying fabric cuttings fixed, which are not susceptible of being separated from the respective components even when the latter are subjected to further processing steps and hence to multiple stresses. The components obtained by means of the above-described process were for example subject to repeated tumbling and washing steps during which they were subjected to temperatures of about 70° for a time interval of over 10 minutes, without however this leading to the detachment of the fabric cuttings fixed thereto or to the lifting of the perimeter edges of such cuttings.

The finding thus conceived therefore attains the pre-established objects.

Of course, in the practical obtainment thereof, it can also assume shapes and configurations different from that illustrated above, without departing from the present protective scope.

In addition, all the details can be substituted by technically equivalent elements and the sizes, shapes and materials used can be of any type in accordance with requirements.

## Claims

1. Frame for glasses, which comprises:
- a support structure (2) comprising a front (3) and a pair of arms (4) connected to the front (3);
- at least one fabric cutting (9) fixed to said support structure (2) and intended to remain visible when said frame (1) is worn by a user;
**characterized in that** at least one of the components of said support structure (2) has at least one surface portion (10) made of cellulose acetate and said at least one fabric cutting (9) is fixed to said at least one surface portion (10) made of cellulose acetate, partially embedded therein, with said cellulose acetate at least partially inserted in the weft of said fabric, in order to retain said fabric cutting (9) fixed to said component of the support structure (2); said at least one fabric cutting (9) having an upper layer (h2) that is touchable and substantially free from said surface portion (10) made of cellulose acetate.

2. Frame for glasses according to claim 1, wherein the perimeter edge (9p) of said cutting (9) is sharply cut and is at least partially visible.

3. Frame for glasses according to any one of the preceding claims, wherein said front (3) comprises an internal face (3i) intended to be directed towards the face of the person wearing said glasses (100) and an external face (3e) opposite said internal face (3i) and intended to remain visible, said surface portion (10) only being extended on said external face (3e) of said front (3).

4. Frame for glasses according to claims 2 and 3, wherein said front (3) comprises a border perimeter surface (3p) which connects said internal face (3i) and said external face (3e), the perimeter edge (9p) of said cutting (9) terminating flush on the junction edge between said external face (3e) and said border perimeter surface (3p).

5. Process for obtaining a frame for glasses according to any one of the preceding claims, **characterized in that** it comprises the following operative steps:
- arranging a support plate (30) provided with at least one fixing surface (30') made of cellulose acetate;
- arranging a piece of fabric (90);
- arranging a dose (13) of a solvent (14) susceptible to dissolve said cellulose acetate;
- depositing said fabric piece (90) on the fixing surface (30') of said support plate (30);
- distributing said dose (13) of solvent (14) on the fixing surface (30') of said support plate (30) in order to wet said fixing surface (30') and at least partially dissolve it;
- compressing said fabric piece (90) against the fixing surface (30') of said support plate (30) in order to at least partially embed said fabric piece (90) in said fixing surface (30') dissolved by said dose (13) of solvent (14);
- drying said support plate (30), with said fabric piece (90) on said fixing surface (30'), in order to fix said fabric piece (90) to said support plate (30).

6. Process according to claim 5, **characterized in that** it further comprises the milling of said support plate (30) carrying said fabric piece (90) fixed, in order to obtain at least one component of said glasses frame (1) from said support plate (30).

7. Process according to claim 5 or 6, **characterized in that** said compression is carried out by applying a pressure of at least 2.5 kPa on said fabric piece (90) rested on said fixing surface (30') of said support plate (30) and by maintaining the aforesaid pressure for a time interval equal to at least 5 minutes.

8. Process according to any one of the claims from 5 to 7, **characterized in that** said solvent is acetone.

9. Process according to claim 8, **characterized in that** said dose (13) of acetone (14), for fixing said fabric piece (90) on said support plate (30) of rectangular shape with sizes of the sides equal to about 220 mm and about 80 mm, is comprised between 30 ml and 80 ml for a thickness of the fabric of said piece (90) comprised between 0.6 mm and 1.2 mm.

10. Process according to any one of the claims from 5 to 9, **characterized in that** said arrangement of said fabric piece (90) on the fixing surface (30') of said support plate (30) precedes said distribution of said solvent dose (12) on the fixing surface (30') of said support plate (30), said distribution occurring by means of impregnation of said fabric piece (90) and infiltration of said solvent (13) through said fabric piece (90).
